# DEMANDE DE BREVET EUROPEEN

(11) **EP 4 386 419 A1**
(43) Date de publication de la demande: **19.06.2024**
(21) Numéro de dépôt: 23216993.8
(22) Date de dépôt: 15.12.2023
(51) Int. Cl.: G01S 3/42, G01S 3/56, H01Q 1/12, H01Q 3/10, H04B 7/185

(54) **PROCÉDÉ DE COMMANDE DU POINTAGE D'UNE ANTENNE**

(30) Priorité: 15.12.2022 FR 2213422
(71) Demandeur: THALES, 92190 Meudon (FR)
(72) Inventeur: DELLANDREA-CORNET, Brice, 83600 FREJUS (FR); LUTZ, Geoffrey, 83440 MONTAUROUX (FR)
(74) Mandataire: Atout PI Laplace

(57) **Abrégé**

L'invention se rapporte à un procédé de commande du pointage d'une antenne située sur une plateforme en direction d'un dispositif de communication émettant un signal de référence, comprenant les étapes suivantes :
51) appliquer un premier mode de pointage de l'antenne en utilisant des données d'éphémérides de la plateforme et du dispositif de communication de façon à obtenir une position initiale de pointage en azimut et en élévation de la ligne de visée de l'antenne ;
S2) appliquer un deuxième mode de pointage de l'antenne, comprenant au moins un balayage de l'antenne autour de la position initiale de façon à pointer l'antenne dans une direction qui maximise une puissance reçue du signal de référence ;
S3) appliquer un troisième mode de pointage de l'antenne dans lequel au moins une manoeuvre de triangulation est mise en oeuvre pour pointer l'antenne à partir de la puissance maximale.

## Description

### Domaine technique

L'invention se rapporte à un procédé et un système de commande du pointage d'une antenne pourvue de deux axes de pointage située sur une plateforme en direction d'un dispositif de communication émettant un signal de référence. L'invention trouve son application dans le domaine des télécommunications, et plus particulièrement dans le domaine des télécommunications spatiales.

Les projets de développements de stations orbitales, sur des orbites cislunaires, posent des nouveaux défis en termes de télécommunications spatiales. Sur ce type d'orbite, les distances de communication peuvent être très importantes. La distance entre la passerelle du poste avancé lunaire et le système en orbite autour de la lune, ou avec un système fixe ou mobile sur la lune, peut atteindre 70 000 km pour certaines missions en cours de développement, ce qui représente environ deux fois la distance entre la Terre et un satellite en orbite géostationnaire.

Un autre problème provient du fait que, sur les stations orbitales actuellement en cours de développement, les senseurs et autres équipements du système de commande d'attitude et d'orbite (AOCS pour « Attitude and Orbit Control System ») se trouvent à plusieurs mètres du système de communication du poste avancé lunaire, ce qui peut poser des problèmes de cohérence des trames de données, accentués par les vibrations à bord ainsi que par les déformés thermoélastiques dus aux écarts de température.

Or, l'antenne directive doit être correctement orientée pour permettre au système de communication de collecter suffisamment d'énergie sur les signaux transmis.

Les systèmes de pointage en boucle ouverte basés uniquement sur la connaissance des éphémérides du système cible ne permettent pas d'obtenir une précision suffisante pour transmettre des données à très haut débit avec les niveaux d'énergie requis.

Des systèmes en boucle fermée existent pour optimiser ce pointage, mais ils sont souvent basés sur des systèmes à plusieurs sources RF permettant de détecter, par différentiel de gain entre ces sources, la direction vers laquelle l'antenne devrait être pointée. Les systèmes asservis en boucle fermée utilisent plusieurs sources RF en parallèle du système de communication nominal. Ces systèmes impliquant plusieurs sources RF et plusieurs électroniques de détection de signaux sont bien adaptés pour les stations au sol, sur Terre. Ces systèmes imposent, en plus de la chaîne de communication nominale, des systèmes externes additionnels permettant un asservissement précis.

Cependant, dans des applications embarquées (par exemple pour le pointage d'une antenne embarquée dans une station orbitale vers un rover, vers une station déployée sur la lune ou vers un orbiteur lunaire), les contraintes en masse, en coût et en volume d'accommodation sont très fortes. Ainsi, les systèmes multi-sources sont trop onéreux et leur mise en oeuvre dans des applications embarquées est difficilement envisageable.

Il est connu d'utiliser des antennes réseau à commande de phase qui permettent, par balayage, la détection rapide d'un chemin de pointage nominal. Les antennes basées sur les réseaux à commande de phase ont des gains très réduits ; or, dans les applications visées, les systèmes peuvent avoir un déplacement relatif entre deux instants de mesure, ce qui demanderait de paramétrer l'antenne réseau à commande de phase pour balayer une grande zone de l'espace. Une opération de balayage sur une zone étendue avec un gain réduit ne serait pas satisfaisante pour les applications mentionnées précédemment.

Il existe donc un besoin pour un procédé de commande du pointage d'une antenne, qui offre un débit suffisamment élevé, et qui ne nécessite pas de système antennaire additionnel pour effectuer le pointage.

### Résumé de l'invention

Un objet de l'invention est donc un procédé de commande du pointage d'une antenne située sur une plateforme en direction d'un dispositif de communication émettant un signal de référence, comprenant les étapes suivantes :
S1) appliquer un premier mode de pointage de l'antenne en utilisant des données d'éphémérides de la plateforme et du dispositif de communication de façon à obtenir une position initiale de pointage en azimut et en élévation de la ligne de visée de l'antenne ;
S2) appliquer un deuxième mode de pointage de l'antenne, comprenant au moins un balayage de l'antenne autour de la position initiale de façon à pointer l'antenne dans une direction qui maximise une puissance reçue du signal de référence ;
S3) appliquer un troisième mode de pointage de l'antenne dans lequel au moins une manoeuvre de triangulation est mise en oeuvre pour pointer l'antenne à partir de la puissance maximale.

Avantageusement, le deuxième mode de pointage de l'antenne comprend un premier balayage conique de l'antenne avec un premier angle d'ouverture, et un deuxième balayage conique de l'antenne avec un deuxième angle d'ouverture, le premier angle d'ouverture étant déterminé en fonction de la plage angulaire des lobes secondaires du diagramme d'antenne, le deuxième angle d'ouverture étant déterminé en fonction de la plage angulaire du lobe principal du diagramme d'antenne.

Avantageusement, le deuxième mode de pointage de l'antenne comprend au moins un déplacement en azimut et en élévation, dans lequel, pour chaque déplacement en azimut et en élévation, une recherche de maximum de puissance est effectuée.

Avantageusement, l'antenne a un diagramme d'antenne monotone dans l'espace angulaire dans lequel ont lieu le au moins un balayage de l'antenne et la manoeuvre de triangulation.

Avantageusement, le diagramme d'antenne monotone est obtenu par un déphasage entre le centre de phase de la source de l'antenne et le point focal de la combinaison réflecteur /sub-réflecteur.

Avantageusement, le signal de référence est une porteuse pure dans le deuxième mode de pointage de l'antenne.

Avantageusement, le troisième mode de pointage comprend une étape de comparaison de la distance entre l'antenne et le dispositif de communication par rapport à un seuil, et
- si la distance est supérieure au seuil, une nouvelle manoeuvre de triangulation est mise en oeuvre ;
- si la distance est inférieure au seuil, le pointage de l'antenne (1) est mis en oeuvre en effectuant une recherche de maximum de puissance par au moins un déplacement en azimut et en élévation.

Avantageusement, la manoeuvre de triangulation comprend :
- un déplacement en azimut de la moitié d'un incrément dit de triangulation dans une direction, une mesure de la puissance reçue, un déplacement en azimut de l'incrément dans la direction opposée si la puissance reçue est inférieure à une puissance mesurée avant le déplacement en azimut, ou un déplacement en azimut de la moitié de l'incrément dans la même direction si la puissance reçue est supérieure à la puissance mesurée avant le déplacement ;
- un déplacement en élévation de la moitié d'un incrément dit de triangulation dans une direction, une mesure de la puissance reçue, un déplacement en élévation de l'incrément dans la direction opposée si la puissance reçue est inférieure à une puissance mesurée avant le déplacement en élévation, ou un déplacement en élévation de la moitié de l'incrément dans la même direction si la puissance reçue est supérieure à la puissance mesurée avant le déplacement.

Avantageusement, l'incrément de triangulation résulte d'un compromis entre une précision recherchée pour le calcul de la direction optimale à rallier et une minimisation d'une amplitude du dépointage associé à la manoeuvre de triangulation.

Avantageusement, le premier mode de pointage comprend une commande de ralliement vers la position initiale, la commande comprenant une pluralité de déplacements angulaires en azimut et en élévation, chaque déplacement angulaire ayant une durée prédéterminée.

Avantageusement, le dispositif de communication est disposé sur un corps céleste, et la plateforme est en orbite autour du corps céleste.

Avantageusement la dérive liée au déplacement relatif entre la plateforme et le dispositif de communication est compensée, dans le troisième mode de pointage en utilisant les données d'éphémérides de la plateforme et du dispositif de communication.

L'invention se rapporte aussi à un système de commande du pointage d'une antenne située sur une plateforme et configurée pour communiquer avec un dispositif de communication émettant un signal de référence, le système étant configuré pour :
- appliquer un premier mode de pointage de l'antenne en utilisant des données d'éphémérides de la plateforme et du dispositif de communication de façon à obtenir une position initiale en azimut et en élévation de la ligne de visée de l'antenne ;
- appliquer un deuxième mode de pointage de l'antenne, comprenant au moins un balayage de l'antenne autour de la position initiale de façon à pointer l'antenne dans une direction qui maximise une puissance reçue du signal de référence ;
- appliquer un troisième mode de pointage de l'antenne dans lequel au moins une manoeuvre de triangulation est mise en oeuvre pour pointer l'antenne à partir de la puissance maximale.

### Description des figures

D'autres caractéristiques, détails et avantages de l'invention ressortiront à la lecture de la description faite en référence aux dessins annexés donnés à titre d'exemple.
La figure 1 illustre un exemple d'environnement spatial comprenant une station orbitale en communication avec des systèmes lunaires.
La figure 2 illustre un exemple d'orientation du référentiel utilisé pour le pointage de l'antenne.
La figure 3 illustre un chronogramme temporel du premier mode de pointage.
La figure 4 illustre un exemple de diagramme d'antenne quasi-monotone dans la zone de couverture.
La figure 5 illustre un chronogramme temporel du deuxième mode de pointage.
Les figures 6A-6L illustrent des diagrammes de commande du pointage dans le plan XY pour le deuxième mode de pointage.
La figure 7 illustre un chronogramme temporel du troisième mode de pointage.
Les figures 8A-8E illustrent des diagrammes de commande du pointage dans le plan XY pour le troisième mode de pointage.
La figure 9 illustre le principe de triangulation.

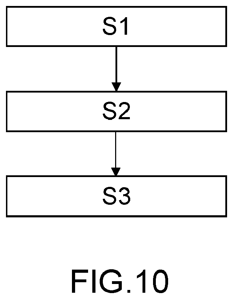

La figure 10 illustre les différentes étapes du procédé selon l'invention.

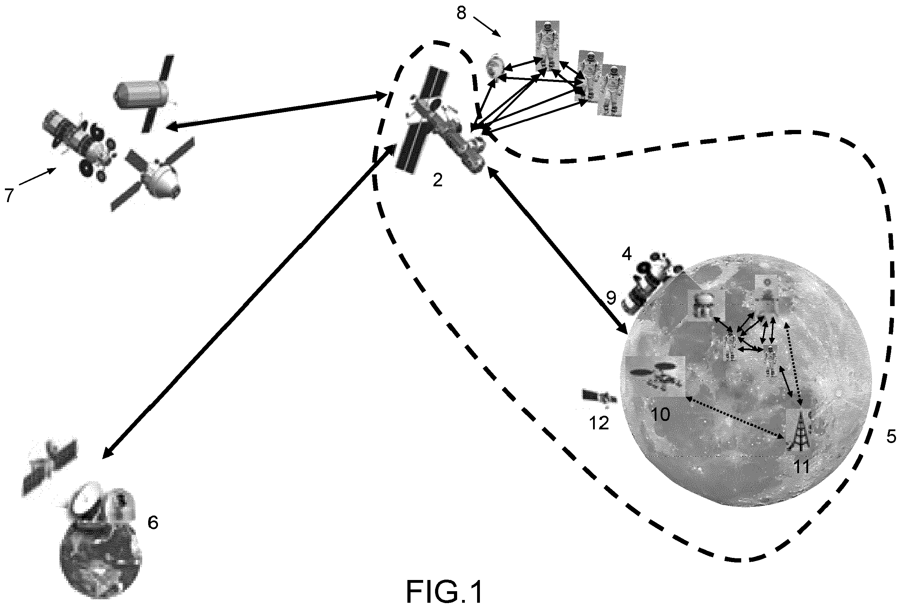

Sur la figure 1, une station terrestre 6 peut être en communication avec une station orbitale 2, par exemple en bande X pour la télécommande et le suivi de la station orbitale 2 (TTC pour Telemetry, Tracking and Control), et en bande Ka pour la transmission de données utiles en liaison montante et descendante. La station orbitale 2 peut être en communication avec des satellites 7, par exemple en bande S, et avec des dispositifs de communication 8 situés à proximité de la station orbitale 2 (utilisés par exemple lors de sorties pour effectuer des opérations de maintenance de la station orbitale 2), en utilisant par exemple un réseau sans fil courte distance. La station orbitale 2 est en communication avec un dispositif de communication 4 situé sur la lune 5 ou en orbite autour de la lune 5, par exemple en bande Ka ou en bande S. L'invention n'est pas limitée à l'une de ces bandes de fréquences.

Le dispositif de communication 4 peut être embarqué, par exemple, dans une station lunaire 9 déployée au sol, dans un rover 10 mobile sur la lune 5, dans une station de communication 11 servant de relais sur la lune, ou encore un système 12 en orbite autour de la lune. Dans le cadre de l'invention, il est essentiel que le dispositif de communication 4 soit capable d'émettre un signal de référence. Le signal de référence est avantageusement une porteuse pure, en particulier un signal sinusoïdal.

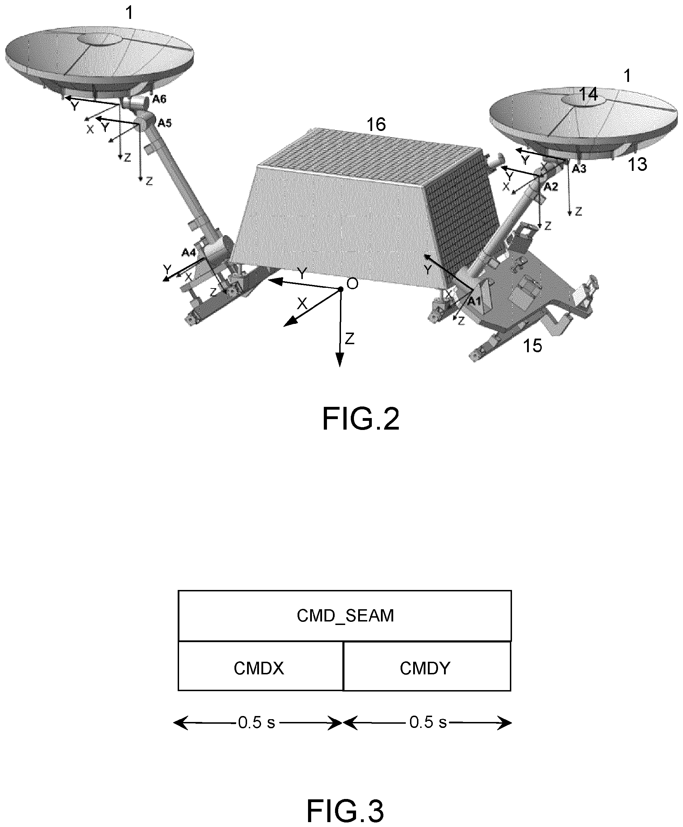

La figure 2 illustre une vue détaillée du système d'antennes 1 de la station orbitale 2. Chaque antenne 1 peut être du type antenne parabolique Cassegrain, comprenant un réflecteur principal 13 et un réflecteur secondaire 14 situé au point focal du réflecteur principal 13. Le système antennaire comprend également une structure de support 15, qui sert d'interface entre l'antenne et la plateforme du satellite.

Un boitier 16 permet de protéger les différents éléments interagissant avec l'antenne, par exemple :
- un émetteur/récepteur, couplé à l'antenne, et capable de mesurer le niveau de puissance du signal RF reçu,
- un calculateur, connecté à l'émetteur/récepteur, et capable d'interpréter les informations reçues par l'émetteur/récepteur et de définir une solution de commande d'après une stratégie de guidage définie localement,
un système de commande des moteurs des axes de l'antenne, capable de recevoir la commande du calculateur et de commander un mouvement à l'antenne directive.

Le boitier 16 peut également héberger un système externe, fournissant au calculateur un nombre minimum d'informations sur le système avec lequel la communication doit être établie notamment, les paramètres fondamentaux RF (fréquence, modulation, codage, débit, clé de cryptographie, identifiants protocolaires, etc.), ou encore la position grossière du système cible afin de restreindre l'espace de recherche.

Le repère utilisé pour la description est un repère lié au réflecteur de l'antenne, et donc qui est mobile en fonction du pointage antenne. Les références A1, A2 et A3 permettent d'identifier les moteurs respectivement de déploiement (A1) et de pointage (A2 et A3). L'implémentation de référence comportant deux antennes, les références A1, A2 et A3 qui s'appliquent à une antenne correspondent respectivement aux références A4, A5 et A6 sur la seconde antenne.

Le repère XYZ, dont l'origine correspond au centre du réflecteur parabolique, est défini par les axes suivants :
Z : ligne de visée de l'antenne
Y : perpendiculaire à Z, de même sens et orientation que l'axe de rotation du moteur A3 pour l'antenne 1 (du moteur A6 pour la deuxième antenne 1 sur la figure 2), passant par l'origine du repère.
X : Complète le trièdre direct.

La figure 2 illustre un système antennaire comprenant deux antennes à réflecteurs, mais cette représentation n'est nullement limitative. L'invention pourrait également être mise en oeuvre avec un nombre différent d'antennes, sans qu'il n'y ait de limitation au type d'antenne utilisé. Il est toutefois essentiel que chaque antenne puisse effectuer un pointage selon deux axes.

Le procédé de commande selon l'invention comprend trois modes exécutés l'un à la suite de l'autre, qui permettent d'acquérir le pointage en boucle fermée après plusieurs étapes de recherche et de convergence vers la performance optimale, depuis un espace de recherche étendu. Le pointage est dit en boucle fermée car il repose sur l'émission d'un signal de référence par le dispositif cible.

Le premier mode de pointage de l'antenne 1 est effectué en utilisant des données d'éphémérides de la plateforme 2 et du dispositif de communication 4. Les éphémérides sont traduites en commande de position et vitesse relatives entre la plateforme 2 et le dispositif de communication 4 envoyées au calculateur. Ces commandes peuvent être générées par exemple en temps réel à une fréquence typique de 1 Hz, ou sous forme de profils polynomiaux interpolés sur un segment temporel. Le calculateur utilise alors ces directions cibles et une estimation de la direction de la ligne de visée de l'antenne pour calculer un incrément angulaire à réaliser par les moteurs du mécanisme de pointage de l'antenne. Le premier mode permet ainsi de rallier et de suivre une direction cible avec une précision grossière correspondant à la précision des éphémérides fournies au calculateur. Le ralliement de cette direction est une condition préalable à la transition vers les modes de pointage fin (dits en boucle fermée), et en constitue donc la condition initiale.

La ligne de visée de l'antenne correspond à l'axe de gain maximal (puissance rayonnée maximale) d'une antenne directionnelle. Pour la plupart des antennes, l'axe de visée est l'axe de symétrie de l'antenne. Par exemple, pour les antennes paraboliques à alimentation axiale, l'axe de visée de l'antenne est l'axe de symétrie de l'antenne parabolique et le diagramme de rayonnement de l'antenne (le lobe principal) est symétrique autour de l'axe de visée.

La figure 3 illustre un exemple de chronogramme du pattern de commande CMD_SEAM du premier mode de pointage. Le pattern est répété jusqu'à ce que l'axe de visée de l'antenne pointe vers la direction cible déterminée par les données d'éphémérides. Le pattern CMD_SEAM peut être décomposé en une commande de déplacement de l'axe de visée selon l'axe X du référentiel d'antenne pendant une durée prédéterminée, suivi d'une commande de déplacement de l'axe de visée selon l'axe Y du référentiel d'antenne pendant une durée prédéterminée. La durée prédéterminée peut être par exemple égale à 0,5 secondes, et le mouvement de ralliement peut être effectué à une vitesse maximale de 1,4 degrés/seconde. Ces valeurs numériques dépendent des caractéristiques de l'antenne.

Le deuxième mode de pointage de l'antenne 1 consiste à effectuer au moins un balayage de l'antenne 1 autour de la position initiale vers laquelle l'antenne pointe à l'issue du premier mode de pointage, de façon à pointer l'antenne 1 dans une direction qui maximise une puissance reçue du signal de référence.

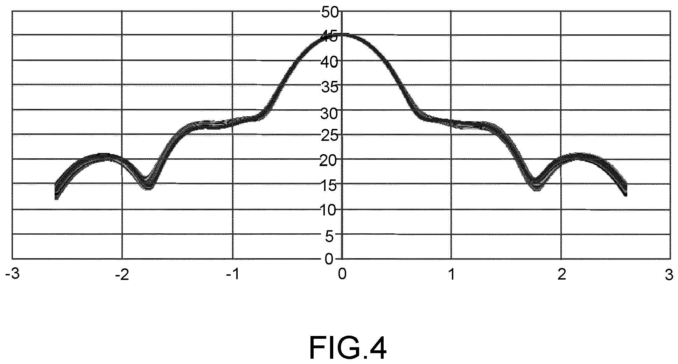

Afin d'associer sans ambiguïté le niveau d'énergie reçue à un angle de dépointage de l'antenne, l'antenne doit disposer d'un pattern monotone dans la zone de couverture avec un maximum de gain en position centrale correspondant à l'axe de visée, comme illustré sur le diagramme d'antenne de la figure 4.

On entend par « pattern monotone » un diagramme de rayonnement qui est strictement croissant ou décroissant autour de l'axe de visée de l'antenne. Ainsi, sur la plage des angles négatifs, le gain est strictement croissant, et sur la plage des angles positifs, le gain est strictement décroissant.

Sur la figure 4, des creux apparaissent à environ -1,8° et 1,8°. Ainsi, pour cette antenne, les mesures sont effectuées dans la plage de valeur située entre les creux.

Un pattern antenne complètement monotone permet d'optimiser le contrôle du pointage en associant précisément l'angle de consigne au niveau d'énergie reçue, en tenant compte d'un ensemble d'éléments perturbateurs parmi lesquels : les bruits de mesure du niveau de réceptions, les instabilités du système de communication distant, les déformées thermo-élastiques du système d'antenne, de son support et des moteurs, les modes flexibles de l'antenne excités par les commandes, la dynamique du système de communication distant, et les délais dans la chaîne de mesure, calcul et commande.

Le pattern monotone est obtenu en supprimant les trous de gain entre le premier et le deuxième lobes du pattern antenne, ce qui peut être mis en oeuvre par exemple via un déphasage entre le centre de phase de la source et le point focal de la combinaison réflecteur 13/sub-réflecteur 14, ou par exemple en optimisant la forme du réflecteur pour les antennes mono-réflecteur selon des techniques connues.

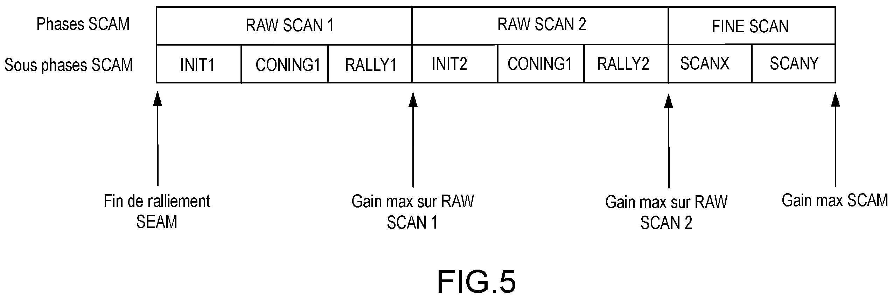

La figure 5 illustre un exemple de chronogramme du deuxième mode de pointage. En plus du premier balayage conique, il comprend un deuxième balayage conique, ainsi qu'un déplacement en azimut et en élévation. Le deuxième balayage conique et le déplacement en azimut et en élévation sont facultatifs, et permettent d'affiner l'opération de ralliement vers la position de gain maximal.

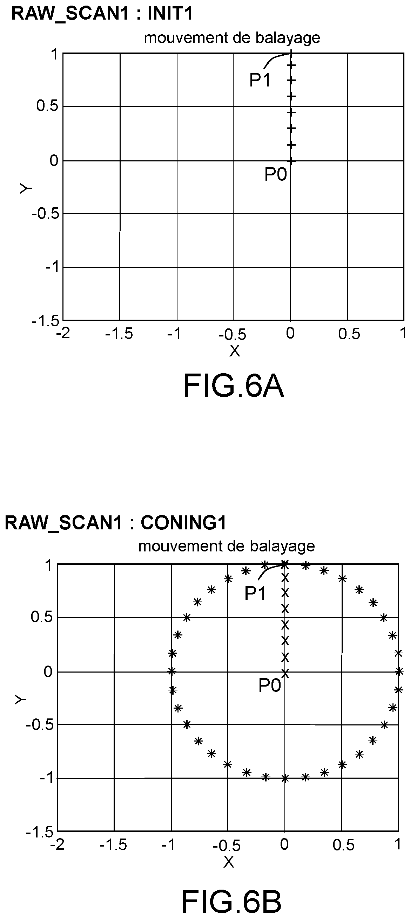

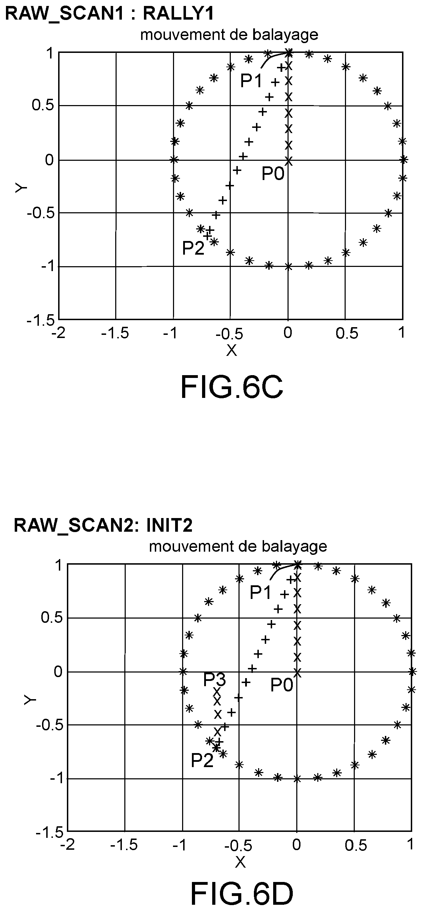

Le premier balayage conique de l'antenne 1, illustré par les figures 6A, 6B et 6C, est effectué avec un premier angle d'ouverture qui est déterminé en fonction de la plage angulaire des lobes secondaires du diagramme d'antenne.

Sur la figure 6A, la ligne de visée est déplacée selon un des axes moteurs de l'antenne, à savoir en élévation ou en azimut, par rapport à la position initiale P0 fournies par les données d'éphéméride du premier mode de pointage vers une position P1. Sur la figure 6B, un mouvement conique est effectué à partir de la position P1, et le gain est mesuré à intervalle temporel régulier. Il peut être noté que la plage angulaire du balayage conique ([-1°, 1°]) sur les figures 6A à 6C correspond sensiblement à l'amplitude du re-pointage à réaliser pour atteindre le lobe principal sur la figure 4.

Par exemple, le modèle de déplacement de la ligne de visée dans le premier balayage conique peut comprendre un déplacement de 0,5 secondes en azimut (axe X), suivi d'un déplacement de 0,5 secondes en élévation (axe Y), et d'un délai de mesure du gain de 0,375 secondes. Ces valeurs sont fournies à titre d'exemple, et ne sont nullement limitatives. A chaque point de mesure, la valeur du gain est mesurée et enregistrée en mémoire.

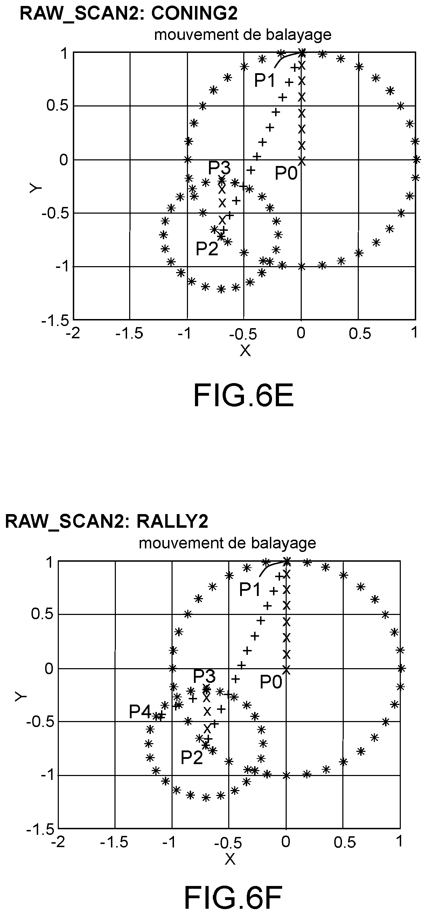

Sur la figure 6C, la ligne de visée de l'antenne rallie la position P2 qui correspond à la valeur maximale du gain. Sur la figure 6D, la ligne de visée est déplacée selon un des axes moteurs de l'antenne, à savoir en élévation ou en azimut, par rapport à la position P2 correspondant au gain maximal du premier balayage conique, vers une position P3. Sur la figure 6E, un mouvement conique est effectué à partir de la position P3, et le gain est mesuré à intervalle temporel régulier, de la même façon que pour le premier balayage conique. La plage angulaire du deuxième balayage conique est plus petite que la plage angulaire du premier balayage conique (typiquement entre 0,5° et 1°).

Sur la figure 6F, la ligne de visée est dépointée de façon à rallier la position P4 qui correspond à la position de l'ensemble de mesures du deuxième balayage qui maximise le gain.

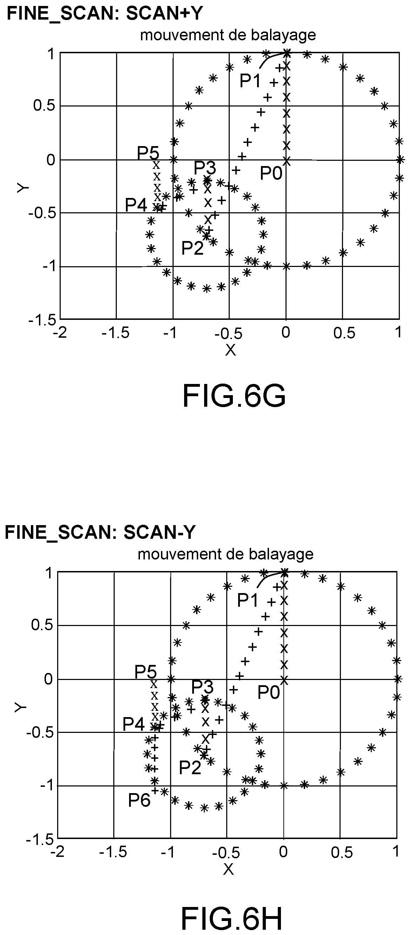

Afin d'affiner la mesure, le deuxième mode de pointage peut être complété par un déplacement en azimut et en élévation (mouvement en croix), comme l'illustrent les figures 6G à 6L. Sur la figure 6G, la ligne de visée est déplacée selon l'un des axes moteurs de l'antenne (par exemple élévation sur la figure 6G), jusqu'à une position P5. Le déplacement est effectué jusqu'à ce que le gain mesuré diminue. Les mesures de gain sont effectuées à intervalles de temps réguliers.

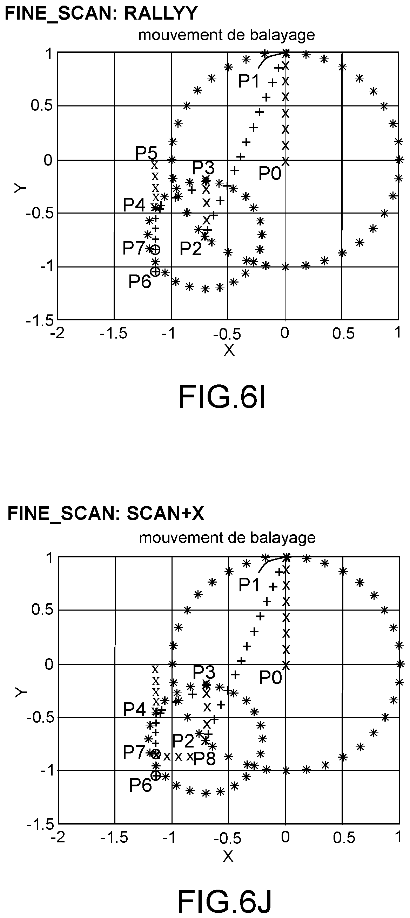

Sur la figure 6H, la ligne de visée est déplacée dans le sens opposé par rapport à la position P4 jusqu'à une position P6. Ce déplacement est commandé lorsque le déplacement précédent n'a pas détecté d'augmentation de gain, et jusqu'à ce que le gain mesuré diminue à nouveau. Le gain est mesuré à chaque point de mesure, et la position P7 est retenue pour la suite comme étant la position qui maximise la mesure du gain en élévation (figure 6I).

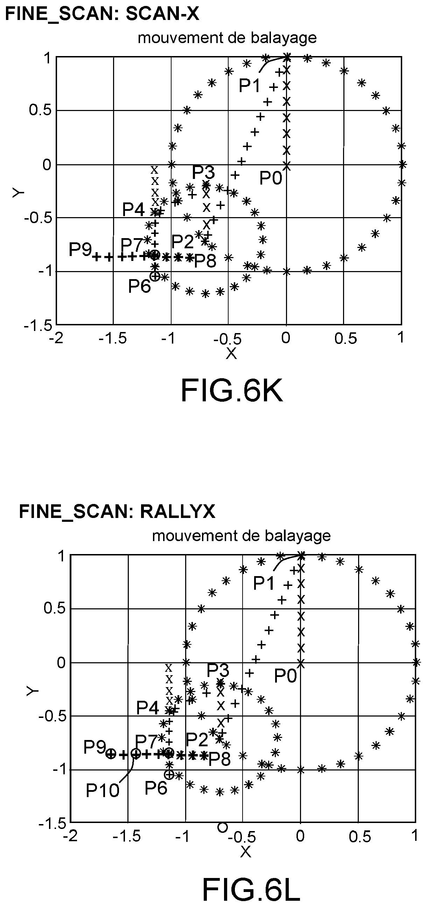

La même procédure est effectuée en azimut (axe X), comme l'illustrent la figure 6J, la figure 6K, et la figure 6L. Le balayage en azimut commence à partir du point de mesure maximal P7 en élévation. Il est finalement déterminé que le point P10 maximise la mesure du gain en azimut.

L'utilisation des deux balayages coniques et de la recherche en croix permet d'alterner des phases d'activation de l'antenne, de tranquillisation du mouvement et d'observation de la mise à jour de la puissance reçue pour actualiser le profil de commande.

Les différentes étapes du deuxième mode de pointage sont illustrées par la figure 5. Le premier balayage conique RAW SCAN 1 comprend une phase d'initialisation INIT1, une phase de balayage CONING1, et une phase de ralliement RALLY1. Le deuxième balayage conique RAW SCAN 2 comprend une phase d'initialisation INIT2, une phase de balayage CONING2, et une phase de ralliement RALLY2. Le balayage fin en croix comprend différentes séquences de balayage en azimut SCANX et de balayage en élévation SCANY.

Le procédé selon l'invention comprend un troisième mode de pointage de l'antenne 1 dans lequel au moins une manoeuvre de triangulation est mise en oeuvre pour repointer l'antenne 1 à partir de la puissance maximale.

La position de départ de l'antenne correspond à la position déterminée dans le deuxième mode de pointage, qui maximise une puissance reçue du signal de référence (point P10 sur la figure 6L).

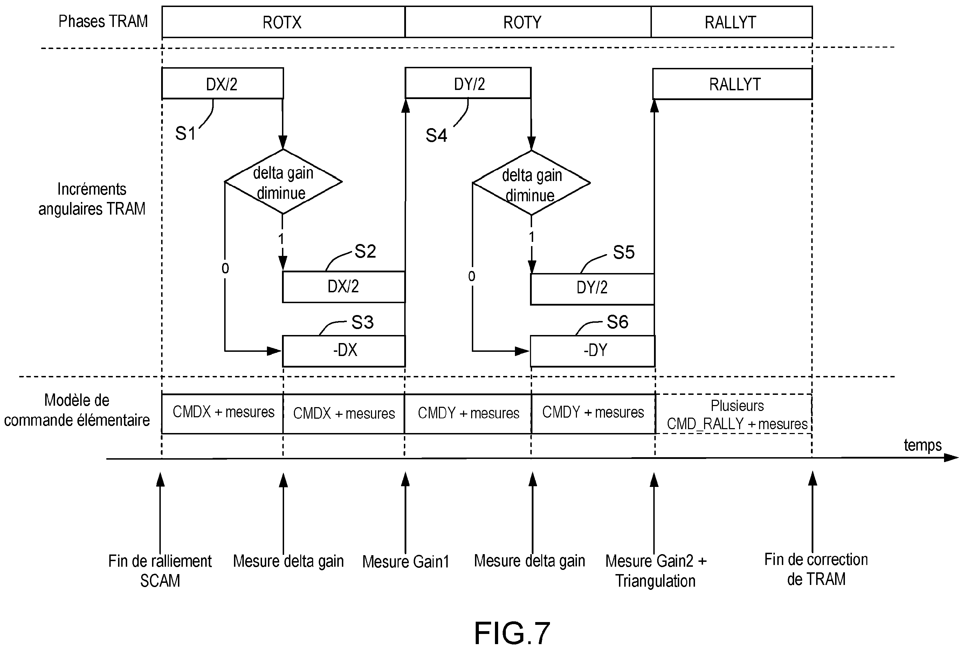

Une première étape du troisième mode de pointage consiste à appliquer une commande de déplacement de la ligne de visée en azimut et en élévation, selon une manoeuvre illustrée par la figure 7.

L'erreur de pointage est ensuite estimée à partir de la connaissance du pattern antenne, la mesure courante de la puissance reçue et l'estimation de la puissance émise par la cible obtenue à partir de la puissance maximale mesurée en position finale P10 de la phase de scan qui minimise le dépointage par rapport à cette cible.

Lorsque l'erreur de pointage estimée dépasse un seuil prédéterminé correspondant à la zone morte de contrôle, la ligne de visée est déplacée en azimut de la moitié d'un incrément angulaire de triangulation DX dans une direction (figure 7, étape S1, déplacement DX/2). L'incrément angulaire de triangulation résulte d'un compromis entre la précision recherchée pour le calcul de la direction optimale à rallier (solution du problème de triangulation) et l'amplitude du dépointage associé à la manoeuvre de triangulation qui doit être minimisée. Le gain est mesuré, et si le gain augmente par rapport à la mesure précédente effectuée à la fin du deuxième mode de pointage, la ligne de visée est à nouveau déplacée en azimut de la moitié de l'incrément de triangulation dans la même direction (figure 7, étape S2). A l'inverse, la ligne de visée est déplacée en azimut de l'incrément dans la direction opposée si la puissance reçue a diminué par rapport à la mesure précédente effectuée à la fin du deuxième mode de pointage (figure 7, étape S3, déplacement - DX). Cette logique permet de minimiser l'erreur de pointage au cours de la manoeuvre de triangulation. A l'issue des étapes S2 ou S3, le gain GAIN1 est mémorisé. Sur la figure 7, la valeur « deltaGain » correspond à la différence entre la puissance mesurée à la position courante et la puissance maximal estimée en phase de scan. Donc si le deltaGain augmente, le gain diminue.

La même commande est ensuite effectuée en élévation, à partir du point pour lequel la procédure de déplacement s'est terminée en azimut à l'issue des étapes S2 ou S3. La ligne de visée est déplacée en élévation de la moitié d'un incrément de triangulation dans une direction (figure 7, étape S4, déplacement DY/2). Le gain est mesuré, et si le gain augmente par rapport à la mesure précédente effectuée à la fin du deuxième mode de pointage, la ligne de visée est à nouveau déplacée en élévation de la moitié de l'incrément prédéterminé dans la même direction (figure 7, étape S5). A l'inverse, la ligne de visée est déplacée en élévation de l'incrément dans la direction opposée si la puissance reçue a diminué par rapport à la mesure précédente effectuée à l'issue du déplacement en azimut dans le troisième mode de pointage (figure 7, étape S6, déplacement -DY). A l'issue des étapes S5 ou S6, le gain GAIN2 est mémorisé. Cette procédure de triangulation en deux étapes permet de minimiser le dépointage de l'antenne par rapport la direction d'intérêt (qui maximise le gain reçu).

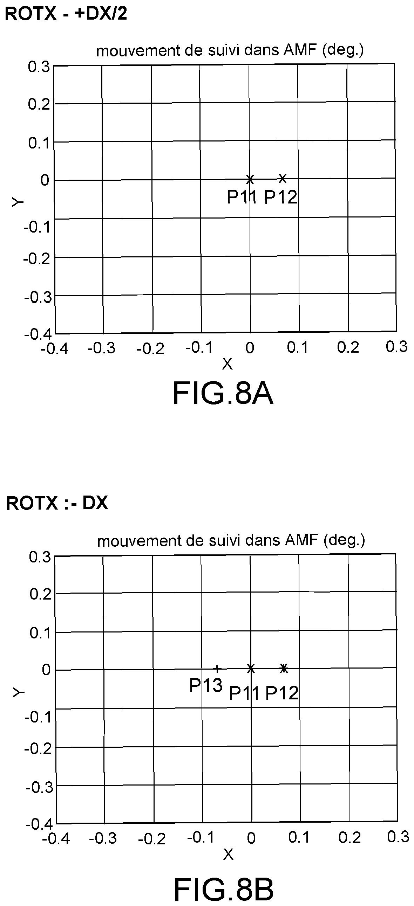

Les figures 8A à 8E illustrent un exemple des différentes étapes de déplacement pour le troisième mode de pointage de l'antenne.

Sur la figure 8A, le point P11 correspond aux références en azimut et en élévation à l'instant où l'erreur de pointage estimée sort de la zone morte de contrôle (seuil à partir duquel une correction du pointage est commandée). La ligne de visée est déplacée en azimut d'une valeur DX/2, jusqu'au point P12. Le gain diminue entre les points P11 et P12, donc la ligne de visée est déplacée en azimut de -DX, jusqu'au point P13 (figure 8B).

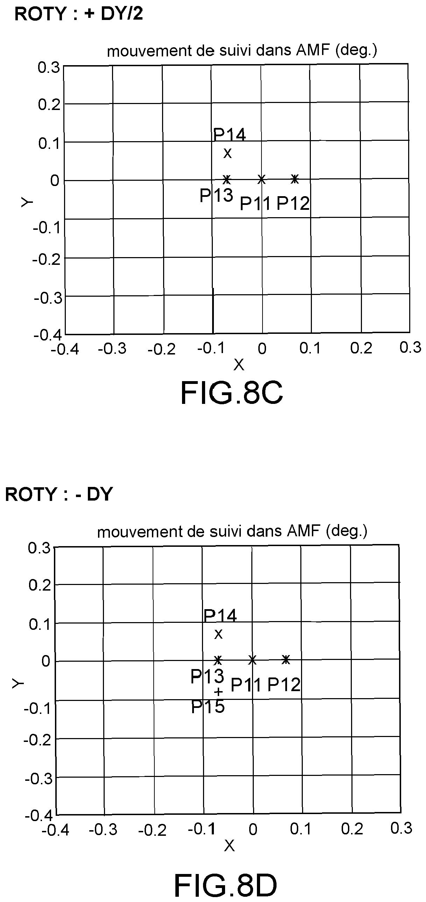

De la même manière, sur la figure 8C, la ligne de visée est déplacée en élévation d'une valeur DY/2, jusqu'au point P14. Le gain diminue entre les points P13 et P14, donc la ligne de visée est déplacée en élévation de -DY, jusqu'au point P15 (figure 8D).

L'invention pourrait aussi être mise en oeuvre en effectuant d'abord le déplacement en élévation, puis le déplacement en azimut, pour le troisième mode de pointage.

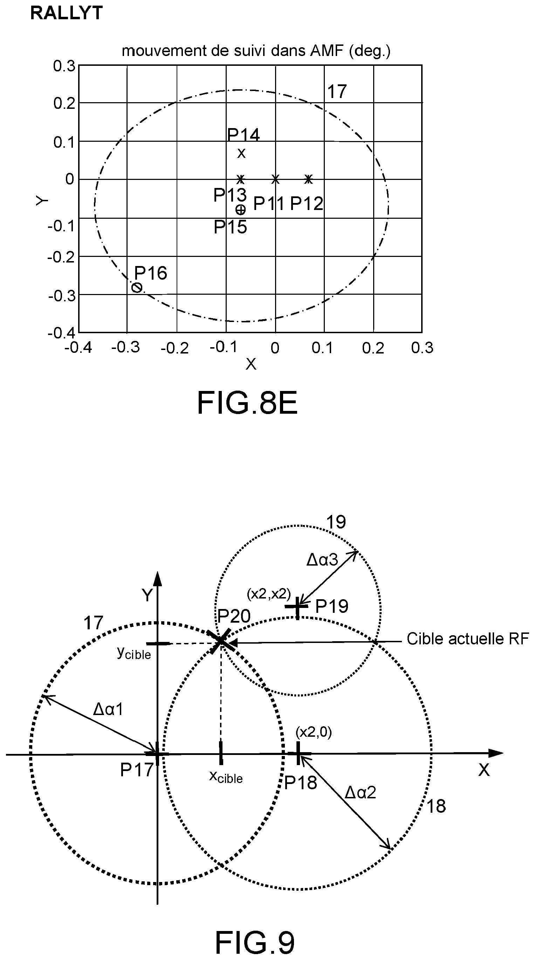

Le calcul du point optimal à rallier est ensuite mise en oeuvre à partir du point P15 en calculant la solution du problème de triangulation à partir des mesures effectuées lors de la manoeuvre de triangulation décrite précédemment. Pour l'exemple de manoeuvre de triangulation illustrée figures 8A, 8B, 8C, 8D, les mesures utilisées pour ce calcul sont les points P12, P13, P14 et P15. Sur l'exemple illustré figure 8E, la solution du problème de triangulation est le point P16, et correspond au premier ordre à la correction de la zone morte de contrôle représentée par le cercle sur la figure 8E, et en dessous de laquelle aucune correction de pointage n'est commandée.

La figure 9 illustre le principe de triangulation appliqué au procédé selon l'invention pour une manoeuvre de triangulation simplifiée par rapport à celle illustrée par la figure 8E. Cette manoeuvre simplifiée est déclenchée lorsque le dépointage estimé de l'antenne par rapport à la direction cible dépasse un seuil de performance, et part d'une position initiale de triangulation P17, correspondant à la position antenne ralliée dans le précédent mode de pointage ou lors de la dernière correction de position antenne effectuée dans le mode courant de pointage. Cette position n'est plus optimale à l'instant d'initier une nouvelle triangulation car la puissance mesurée en ce point est plus faible que la puissance maximale observée et ralliée dans le précédent mode de pontage ou dans la précédente séquence de correction dans le mode de pointage courant. Sur la figure 9, la position antenne correspondant à cette puissance maximale observée a dérivé en P20 du fait des mouvements relatifs du système poursuivant et de la cible. Le dépointage en P17 (Δα1) est estimé à partir du diagramme de rayonnement antenne et du différentiel de puissance mesurée entre la puissance maximale observée dans le précédent mode de pointage (P20) et la puissance mesurée au point P17. Le point optimal P20 se trouve alors sur le cercle de centre P17 et d'angle Δα1.

A la suite au déplacement en azimut décrit précédemment (figures 8A et 8B), le point cible P20 se trouve sur un deuxième cercle 18, de centre P18 et de rayon connu Δα2 correspondant au dépointage estimé en P18 à partir du diagramme de rayonnement antenne et du différentiel de puissance mesurée entre la puissance maximale observée dans le précédent mode de pointage et la puissance mesurée au point P18.

De la même façon, à la suite au déplacement en élévation décrit précédemment (figures 8C et 8D), le point cible P20 se trouve sur un troisième cercle 19 ayant un troisième rayon connu Δα3 et déterminé en fonction du diagramme de rayonnement de l'antenne.

La solution du problème de triangulation peut être calculée par l'intersection P20 du premier cercle 17, du deuxième cercle 18 et du troisième cercle 19. Le ralliement se fait ensuite en direction du point P20.

Les mesures de puissance P17, P18 et P19 permettent d'estimer les dépointages angulaires Dα1, Dα2, Dα3 en ces points par rapport au point optimal à rallier (P20). La solution du problème de triangulation correspond à l'intersection des trois cercles de rayon Dα1, Dα2, Dα3.

La manoeuvre de triangulation permet avantageusement d'effectuer une mesure précise même en cas de mouvement relatif entre l'antenne et le dispositif de communication 4, occasionné par exemple par la dynamique orbitale de la plateforme de l'antenne et/ou du support du dispositif de communication 4, après que le deuxième mode de pointage ait été effectué.

Lorsque la distance entre l'antenne 1 et le dispositif de communication 4 est trop faible, l'émetteur/récepteur et le calculateur abaissent typiquement le niveau du signal reçu, pour éviter d'endommager les composants de la chaîne de réception (technique dite de « clamping »). Cela pourrait perturber l'opération de triangulation en faussant les niveaux de réception.

Pour éviter cela, le troisième mode de pointage est utilisé pour des distances entre la plateforme 2 et le dispositif de communication 4 inférieures à un seuil réglable, correspondant à la distance en dessous de laquelle le dispositif de communication 4 diminue sa puissance émise (clamping). La connaissance de distance est contenue dans les données d'éphémérides livrées par la plateforme 2 au calculateur. Ainsi, si la distance est supérieure au seuil, une nouvelle manoeuvre de triangulation est mise en oeuvre. Si la distance est inférieure au seuil, le repointage de l'antenne 1 à partir de la puissance maximale est mis en oeuvre en effectuant une recherche de maximum de puissance par au moins un déplacement en azimut et en élévation.

Dans les deux modes de pointage décrits, la dérive liée au déplacement relatif entre la plateforme 2 et le dispositif de communication 4 est compensée en utilisant les données d'éphémérides de la plateforme 2 et du dispositif de communication 4. L'incrément angulaire commandé correspond ainsi à l'incrément angulaire pour réaliser la manoeuvre en repère antenne pour chacune des phases de pointage décrites précédemment, auquel s'ajoute un incrément permettant de compenser la dérive de la cible au cours de cette manoeuvre. Cette dérive est estimée à partir des positions et vitesses relatives entre la cible et le dispositif de pointage, contenues dans les données éphémérides délivrées au calculateur.

Le procédé selon l'invention permet d'implémenter un pointage monosource en boucle fermée, qui permet de passer, pour l'implémentation de référence, d'une précision en boucle ouverte d'environ 1,6° à une précision en boucle fermée d'environ 0,3°. Le gain d'antenne s'en trouve considérablement amélioré et les débits possibles passent de 100 ksps à 50 Msps.

Par ailleurs, le système utilisé pour trouver le pointage optimal de ligne de visée est le même que celui utilisé pour la communication.

Enfin, si, dans l'implémentation de référence, le dispositif de communication 4 est opéré en boucle ouverte, il est possible d'implémenter également un pointage en boucle fermée sur ce dispositif en veillant à prendre en compte les performances de pointage de ce système afin de garantir la stabilité de la communication.

## Revendications

1. Procédé de commande du pointage d'une antenne (1) située sur une plateforme (2) en direction d'un dispositif de communication (4) émettant un signal de référence, comprenant les étapes suivantes :
S1) appliquer un premier mode de pointage de l'antenne (1) en utilisant des données d'éphémérides de la plateforme (2) et du dispositif de communication (4) de façon à obtenir une position initiale de pointage en azimut et en élévation de la ligne de visée de l'antenne ;
S2) appliquer un deuxième mode de pointage de l'antenne (1), comprenant au moins un balayage de l'antenne (1) autour de la position initiale de façon à pointer l'antenne (1) dans une direction qui maximise une puissance reçue du signal de référence ;
S3) appliquer un troisième mode de pointage de l'antenne (1) dans lequel au moins une manoeuvre de triangulation est mise en oeuvre pour pointer l'antenne (1) à partir de la puissance maximale.

2. Procédé selon la revendication 1, dans lequel le deuxième mode de pointage de l'antenne (1) comprend un premier balayage conique de l'antenne (1) avec un premier angle d'ouverture, et un deuxième balayage conique de l'antenne (1) avec un deuxième angle d'ouverture, le premier angle d'ouverture étant déterminé en fonction de la plage angulaire des lobes secondaires du diagramme d'antenne, le deuxième angle d'ouverture étant déterminé en fonction de la plage angulaire du lobe principal du diagramme d'antenne.

3. Procédé selon l'une des revendications précédentes, dans lequel le deuxième mode de pointage de l'antenne (1) comprend au moins un déplacement en azimut et en élévation, dans lequel, pour chaque déplacement en azimut et en élévation, une recherche de maximum de puissance est effectuée.

4. Procédé selon l'une des revendications précédentes, dans lequel l'antenne (1) a un diagramme d'antenne monotone dans l'espace angulaire dans lequel ont lieu le au moins un balayage de l'antenne (1) et la manoeuvre de triangulation.

5. Procédé selon la revendication 4, dans lequel le diagramme d'antenne monotone est obtenu par un déphasage entre le centre de phase de la source de l'antenne (1) et le point focal de la combinaison réflecteur (13)/sub-réflecteur (14).

6. Procédé selon l'une des revendications précédentes, dans lequel le signal de référence est une porteuse pure dans le deuxième mode de pointage de l'antenne.

7. Procédé selon l'une des revendications précédentes, dans lequel le troisième mode de pointage comprend une étape de comparaison de la distance entre l'antenne (1) et le dispositif de communication (4) par rapport à un seuil, et
- si la distance est supérieure au seuil, une nouvelle manoeuvre de triangulation est mise en oeuvre ;
- si la distance est inférieure au seuil, le pointage de l'antenne (1) est mis en oeuvre en effectuant une recherche de maximum de puissance par au moins un déplacement en azimut et en élévation.

8. Procédé selon l'une des revendications précédentes, dans lequel la manoeuvre de triangulation comprend :
- un déplacement en azimut de la moitié d'un incrément dit de triangulation dans une direction, une mesure de la puissance reçue, un déplacement en azimut de l'incrément dans la direction opposée si la puissance reçue est inférieure à une puissance mesurée avant le déplacement en azimut, ou un déplacement en azimut de la moitié de l'incrément dans la même direction si la puissance reçue est supérieure à la puissance mesurée avant le déplacement ;
- un déplacement en élévation de la moitié d'un incrément dit de triangulation dans une direction, une mesure de la puissance reçue, un déplacement en élévation de l'incrément dans la direction opposée si la puissance reçue est inférieure à une puissance mesurée avant le déplacement en élévation, ou un déplacement en élévation de la moitié de l'incrément dans la même direction si la puissance reçue est supérieure à la puissance mesurée avant le déplacement.

9. Procédé selon la revendication 8, dans lequel l'incrément de triangulation résulte d'un compromis entre une précision recherchée pour le calcul de la direction optimale à rallier et une minimisation d'une amplitude du dépointage associé à la manoeuvre de triangulation.

10. Procédé selon l'une des revendications 8 ou 9, dans lequel, en cas de mouvement relatif entre l'antenne (1) et le dispositif de communication (4) à l'issue du deuxième mode de pointage :
- la manoeuvre de triangulation est déclenchée lorsque le dépointage estimé de l'antenne par rapport à la direction cible dépasse un seuil de performance, et part d'une position initiale de triangulation (P17), correspondant à la position antenne ralliée dans le précédent mode de pointage ou lors de la dernière correction de position antenne effectuée dans le mode courant de pointage, le dépointage (Δα1) en la position initiale de triangulation (P17) étant estimé à partir du diagramme de rayonnement antenne et du différentiel de puissance mesurée entre la puissance maximale observée dans le précédent mode de pointage (P20) et la puissance mesurée au point de la position initiale de triangulation (P17), le point cible (P20) se trouvant sur le cercle ayant pour centre la position initiale de triangulation (P17) et de rayon correspondant au dépointage (Δα1) ;
- suite au déplacement en azimut, le point cible (P20) se trouve sur un deuxième cercle (18), d'un centre déterminé par l'incrément de triangulation (P18) et de rayon connu (Δα2) correspondant au dépointage estimé au niveau du centre (P18) du deuxième cercle (18) à partir du diagramme de rayonnement antenne et du différentiel de puissance mesurée entre la puissance maximale observée dans le précédent mode de pointage et la puissance mesurée au centre (P18) du deuxième cercle (18) ;
- suite au déplacement en élévation, le point cible (P20) se trouve sur un troisième cercle (19) d'un centre déterminé par l'incrément de triangulation (P19) et de troisième rayon connu (Δα3) correspondant au dépointage estimé au niveau du centre (P19) du troisième cercle (19) à partir du diagramme de rayonnement antenne et du différentiel de puissance mesurée entre la puissance maximale observée dans le précédent mode de pointage et la puissance mesurée au centre (P19) du troisième cercle (18) ;
- La solution du problème de triangulation étant calculée par l'intersection (P20) du premier cercle (17), du deuxième cercle (18) et du troisième cercle (19), le ralliement se fait ensuite en direction du point d'intersectio (P20).

11. Procédé selon l'une des revendications précédentes, dans lequel le premier mode de pointage comprend une commande de ralliement vers la position initiale, la commande comprenant une pluralité de déplacements angulaires en azimut et en élévation, chaque déplacement angulaire ayant une durée prédéterminée.

12. Procédé selon l'une des revendications précédentes, dans lequel le dispositif de communication (4) est disposé sur un corps céleste (5), et la plateforme (2) est en orbite autour du corps céleste (5).

13. Procédé selon l'une des revendications précédentes, dans lequel la dérive liée au déplacement relatif entre la plateforme (2) et le dispositif de communication (4) est compensée, dans le troisième mode de pointage en utilisant les données d'éphémérides de la plateforme (2) et du dispositif de communication (4).

14. Système de commande du pointage d'une antenne située sur une plateforme et configurée pour communiquer avec un dispositif de communication émettant un signal de référence, le système étant configuré pour :
- appliquer un premier mode de pointage de l'antenne en utilisant des données d'éphémérides de la plateforme et du dispositif de communication de façon à obtenir une position initiale en azimut et en élévation de la ligne de visée de l'antenne ;
- appliquer un deuxième mode de pointage de l'antenne, comprenant au moins un balayage de l'antenne autour de la position initiale de façon à pointer l'antenne dans une direction qui maximise une puissance reçue du signal de référence ;
- appliquer un troisième mode de pointage de l'antenne dans lequel au moins une manoeuvre de triangulation est mise en oeuvre pour pointer l'antenne à partir de la puissance maximale.
